# FASCICULE DE BREVET EUROPEEN

(11) **EP 0 640 048 B1**
(45) Date de publication et mention de la délivrance du brevet: **14.05.1997**
(21) Numéro de dépôt: 94908366.1
(22) Date de dépôt: 22.02.1994
(51) Int. Cl.: B62D 1/19

(54) **ENSEMBLE DE SECURITE POUR DISPOSITIF DE LIAISON SEPARABLE NOTAMMENT POUR COLONNE DE DIRECTION DE VEHICULE AUTOMOBILE**
SICHERHEITSVORRICHTUNG FÜR LÖSBARES VERBINDUNGSELEMENT INSBESONDERE FÜR KRAFTFAHRZEUGLENKSÄULE
SAFETY ASSEMBLY FOR A SEPARABLE LINKING DEVICE, ESPECIALLY FOR A MOTOR VEHICLE STEERING COLUMN

(30) Priorité: 26.02.1993 FR 9302271
(43) Date de publication de la demande: 01.03.1995
(73) Titulaire: NACAM, F-41100 Vendôme (FR)
(72) Inventeur: PERICHON, Olivier, Fort Wright KY41011 (US); PONCHET, Patrick, Saint-Ouen, F-41100 Vendôme (FR)
(74) Mandataire: Phélip, Bruno
(86) Numéro de dépôt international: FR9400196
(87) Numéro de publication internationale: WO9419225

(56) Documents cités:
- EP-A- 0 203 845
- EP-A- 0 497 118
- WO-A-92/17362
- FR-A- 2 118 275
- GB-A- 1 174 540
- GB-A- 2 231 312
- US-A- 3 760 649

## Description

La présente invention est relative aux colonnes de transmission et se rapporte plus particulièrement aux colonnes de direction de véhicule automobile, séparables en cas de chocs.

Lorsqu'un véhicule automobile subit un choc frontal, le volant porté par la colonne de direction a tendance à être déplacé dans l'habitacle du véhicule en direction du conducteur. Une des solutions retenues, pour éviter ce déplacement du volant mettant le conducteur en danger, est de rendre la colonne de direction séparable en cas de choc. A cet effet, on a relié deux tronçons d'une colonne de direction au moyen de deux flasques portés chacun par un tronçon, et réunis entre eux par deux axes rendus solidaires de l'un des flasque, et montés à coulissement axial dans des orifices, ménagés dans l'autre flasque. Une architecture de ce type, telle que définie dans le préambule de la revendication 1, a notamment fait l'objet de la demande de brevet FR-A-2 582 279 au nom de la demanderesse.

Ce type de liaison séparable peut dans certains cas de fonctionnement présenter l'inconvénient d'arriver à se dissocier l'un de l'autre sans qu'il y ait un véritable choc.

Le but de la présente invention est de proposer un ensemble de sécurité pour dispositif de liaison séparable qui garantisse que cette liaison sera maintenue dans tous les cas d'utilisation du véhicule hormis celui d'un choc frontal dont la valeur de seuil prédéterminée fait que le dispositif de liaison séparable intervient.

Selon l'invention, l'ensemble de sécurité pour dispositif de liaison séparable, notamment pour colonne de direction pour véhicule automobile, comprend deux tronçons d'arbres coaxiaux qui présentent des portions d'extrémités pliées de façon à faire un angle prédéterminé avec l'axe géométrique commun desdits tronçons d'arbre, lesdites portions d'extrémité se recouvrant et portant chacune un flasque. Chaque flasque est relié à l'autre, qu'il recouvre partiellement par des axes de liaisons séparables approximativement parallèles auxdites portions d'extrémité. L'ensemble de sécurité comporte un clip constitué par une fourche ayant deux faces reliées l'une à l'autre par une âme , de façon que chacune des deux faces vienne prendre appui sur un côté du flasque correspondant.
- l'une des deux faces ayant un système d'attache sur l'une des extrémités d'une partie des axes de liaison;
- l'autre face ayant un système d'agrafage sur l'une des extrémités de l'autre partie des axes de liaison;
- l'une des deux faces étant munie d'ouvertures destinées à recevoir l'extrémité correspondante des axes de liaison non reliés à elle, de manière que ledit clip bloque l'écartement axial des deux flasques l'un par rapport à l'autre, lorsque cet écartement se fait à vitesse lente, tout en permettant cet écartement lorsqu'il s'effectue à vitesse élevée.

Plus précisément l'ensemble de sécurité, selon l'invention est caractérisé en ce que:
- lesdits axes de liaison fixés à chaque flasque sont engagés dans des trous ménagés dans l'autre flasque par l'intermédiaire de douilles;
- l'une des deux faces du clip ayant un système d'attache sur les douilles d'une partie des axes de liaison;
- l'autre face du clip ayant un système d'agrafage sur les douilles de l'autre partie des axes de liaison;
- l'une des faces étant munie d'ouvertures destinées à recevoir l'extrémité correspondante des axes de liaison dont les douilles sont non reliés à elle.

Avantageusement pour le dispositif de liaison séparable selon l'invention:
- chaque flasque est pourvu d'un orifice dans lequel est engagée la portion d'extrémité du tronçon d'arbre correspondant;
- chaque flasque comporte deux saillies latérales qui délimitent entre elles un évidement pour le passage de la portion d'extrémité à laquelle est fixée l'autre flasque;
- les axes de liaison sont fixés chacun dans une saillie latérale de chaque flasque.

Afin d'améliorer encore la fiabilité du dispositif, l'ensemble de sécurité selon l'invention comporte une plaquette fusible disposée entre les deux flasques et entre chacun des flasques et la portion d'extrémité portant l'autre flasque, cette plaquette fusible est amarrée à chacune de ses deux extrémités au côté du flasque correspondant, de manière que ladite plaquette fusible bloque l'écartement axial des deux flasques l'un par rapport à l'autre, lorsque cet écartement se fait à vitesse lente et pour une valeur plus faible que pour le clip, tout en permettant cet écartement lorsqu'il s'effectue à vitesse élevée.

Selon une réalisation particulièrement intéressante de l'invention le clip:
- est constitué par une fourche ayant deux faces reliées l'une à l'autre par une âme;
- l'une des deux faces ayant un système d'attache constitué par deux trous recevant les douilles des axes de liaison;
- l'autre face ayant un système d'agrafage constitué par deux ouvertures munies d'un rétrécissement recevant les douilles des autres axes de liaison;
- l'une des faces possédant également deux trous destinés à recevoir l'extrémité correspondante des axes de liaison dont les douilles sont non reliées à elle.

Afin de s'adapter dans les meilleures conditions à l'architecture du dispositif de liaison séparable, la plaquette fusible est constituée par une partie centrale munie d'un étranglement et de deux extrémités. La partie centrale a une largeur déterminée en fonction de la largeur des évidements des flasques. L'une des extrémités est conformée en talon pour venir s'appliquer contre la face du flasque correspondant, tandis que l'autre extrémité a une largeur sensiblement égale à la largeur de la partie centrale et est munie de deux ailes qui sont rabattues, en fin de montage, contre la face de l'autre flasque.

Ainsi l'ensemble de sécurité selon l'invention présente l'avantage de pouvoir être mis en place dans un dispositif de liaison séparable pour colonne de direction, dont l'objet est de rendre possible la séparation de l'axe de direction d'un véhicule automobile en cas de choc frontal afin d'éviter la remontée du volant. Cet ensemble de sécurité selon l'invention permet d'ajouter un dispositif de sécurité comportant un clip et une plaquette fusible qui agissent séparément l'un de l'autre. Les particularités de cet ensemble, qui sont particulièrement avantageuses, consistent à ne pas modifier les efforts de séparation du dispositif de liaison séparable, et à n'intervenir que pour des efforts d'une valeur nettement différente de la valeur du seuil de choc pour laquelle le dispositif de liaison séparable intervient. De plus le clip bloque la migration axiale des deux flasques lorsqu'elle se fait à vitesse lente, au moyen des trous aménagés à cet effet sur l'une des faces du clip, et qui interfère alors avec l'extrémité correspondante des axes de liaison; tout en ne bloquant pas cet écartement axial des deux flasques l'un par rapport à l'autre, lorsqu'il s'effectue à vitesse élevée, c'est-à-dire en dynamique, ce qui est le cas dans les chocs pour lequel le dispositif de liaison séparable est initialement conçu, les extrémités des axes de liaison n'ayant pas eu le temps de s'engager dans les trous aménagés dans la face correspondante du clip.

D'autres avantages ressortiront de l'invention qui sera mieux comprise à l'aide de la description donnée ci-dessous d'exemples particuliers de réalisation, décrits à titre non limitatif en référence aux dessins annexés sur lesquels:
La Figure 1 est une vue longitudinale de l'ensemble de sécurité d'un dispositif de liaison séparable selon l'invention;
La Figure 2 est une vue en coupe suivant II-II de la Figure 1;
La Figure 3 est une coupe analogue à la Figure 2 du dispositif de liaison séparable seul;
La Figure 4 est une coupe suivant IV-IV de la Figure 2;
La Figure 5 est une vue en perspective du clip de l'ensemble de sécurité selon l'invention;
La Figure 6 est une vue en perspective du clip de la Figure 5 dans une autre position;
La Figure 7 est une vue en bout du clip représenté sur la Figure 5;
La Figure 8 est une vue de dessus de la plaquette fusible de l'ensemble de sécurité selon l'invention;
La Figure 9 est une vue de profil de la plaquette fusible représentée sur la Figure 8.

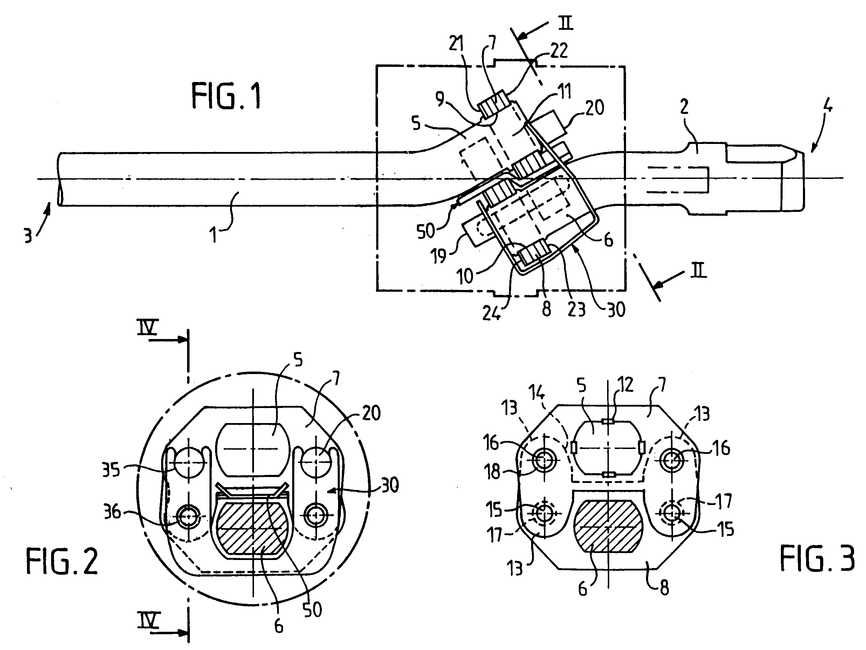

Sur la Figure 1, il a été représenté une portion intermédiaire d'une colonne de direction formée de deux tronçons d'arbre 1, 2, qui sont fixés chacun à un joint de cardan correspondant 3 et 4 de liaison au reste de la colonne de direction, et qui ne sont pas représentés sur la figure.

Chaque tronçon d'arbre 1 et 2 comporte une portion d'extrémité 5 et 6, qui est opposée au joint de cardan 3 et 4 correspondant. Cette portion d'extrémité 5 et 6 est pliée de façon à faire un angle prédéterminé avec l'axe général de la portion de colonne de direction considérée.

Les portions d'extrémités 5 et 6 se recouvrent, et portent chacune un flasque 7 et 8, qui est fixé à la portion d'extrémité correspondante par l'intermédiaire d'un orifice 9 et 10 aménagé dans chacun des flasques 7 et 8.

Les clips ont une forme complémentaire à celle des portions d'extrémité correspondantes 5 et 6, qui sont engagées dans ces orifices. Les portions d'extrémité 5 et 6 présentent avantageusement une surface cannelée 11, et les flasques 7 et 8 sont fixés respectivement sur les portions d'extrémité correspondantes 5 et 6 par matage en bout d'arbre représenté en 12 sur la Figure 3.

Chaque flasque 7 et 8 comporte deux saillies latérales 13, qui délimitent entre elles un évidement 14 aménagé pour le passage de la portion d'extrémité 6 et 5 à laquelle est fixée l'autre flasque 8 et 7.

Des axes de liaison 15 et 16 sont fixés dans chaque saillie 13 des flasques 7 et 8, cette solidarisation pouvant être réalisée par sertissage de ces axes de liaison 15 et 16. Ces axes de liaison 15 et 16 sont engagés à coulissement axial dans des trous 17 et 18 correspondant qui sont aménagés dans l'autre flasque.

Plus particulièrement selon l'invention, les axes de liaisons 15 et 16 sont montés dans les trous 17 et 18 correspondant par l'intermédiaire de douilles référencées respectivement 19 et 20. Ces douilles sont en matériau de friction, par exemple en matière plastique rigide et elles sont pourvues chacune d'un rebord épaulé 19a et 20a. Ces rebords épaulés formant chacun une entretoise pour définir la distance entre les flasques 7 et 8 en position montée.

Dans le mode de réalisation représenté sur les figures, les flasques 7 et 8 sont de forme identique et ils sont montés dans une configuration symétrique par rapport à l'axe de la portion de colonne considéré. Les quatre axes de liaison 15 et 16 sont avantageusement réalisés avec un faible diamètre ce qui les rend déformables afin d'éviter des ruptures brutales.

L'ensemble ainsi constitué permet d'assurer un maintien rigide des tronçons d'arbre 1 et 2 et de transmettre le couple de direction. Les flasques 7 et 8 sont déplacés à partir d'un seuil d'effort et le déplacement est assuré avec un effort contrôlé. Lorsque les axes de liaison 15 et 16 sont totalement dégagés des orifices 17 et 18 des flasques dans lesquels ils sont normalement engagés, les deux tronçons d'arbre 1 et 2 sont libérés l'un par rapport à l'autre.

L'ensemble de sécurité pour dispositif de liaison séparable selon l'invention comporte un clip 30, et une plaquette fusible 50.

Le clip 30 est constitué par une fourche qui a deux faces référencées respectivement 31 et 32, qui sont reliées l'une à l'autre par une âme 33. Cette fourche est conformée de façon que chacune des deux faces 31 et 32 viennent prendre appui sur un côté du flasque 7 et 8 correspondant, comme on peut le voir sur la Figure 1.

D'une manière générale, le clip 30 selon l'invention est agencé de façon que:
- l'une des deux faces, par exemple la face 31 ait un système d'attache sur l'une des extrémités d'une partie des axes de liaison 15 et 16;
- l'autre face 32 ayant un système d'agrafage sur l'une des extrémités de l'autre partie des axes de liaison 15 et 16;
- l'une des deux faces par exemple la face 32, étant munie d'ouvertures, qui sont destinées à recevoir l'extrémité correspondante des axes de liaison qui ne sont pas reliés à elle.

Plus précisément, en se reportant sur le mode de réalisation représenté sur les figures, le clip 30 a une structure dans laquelle:
- l'une des deux faces, c'est-à-dire la face 31, possède un système d'attache sur les douilles 19 d'une partie des axes de liaisons 15 et 16;
- l'autre face 32 du clip 30 a un système d'agrafage sur les douilles 20 de l'autre partie des axes de liaison 15 et 16;
- la face 32 étant de plus munie d'ouvertures qui sont destinées à recevoir l'extrémité correspondante des axes de liaison 15 et 16 dont les douilles 19 sont non reliées à elle.

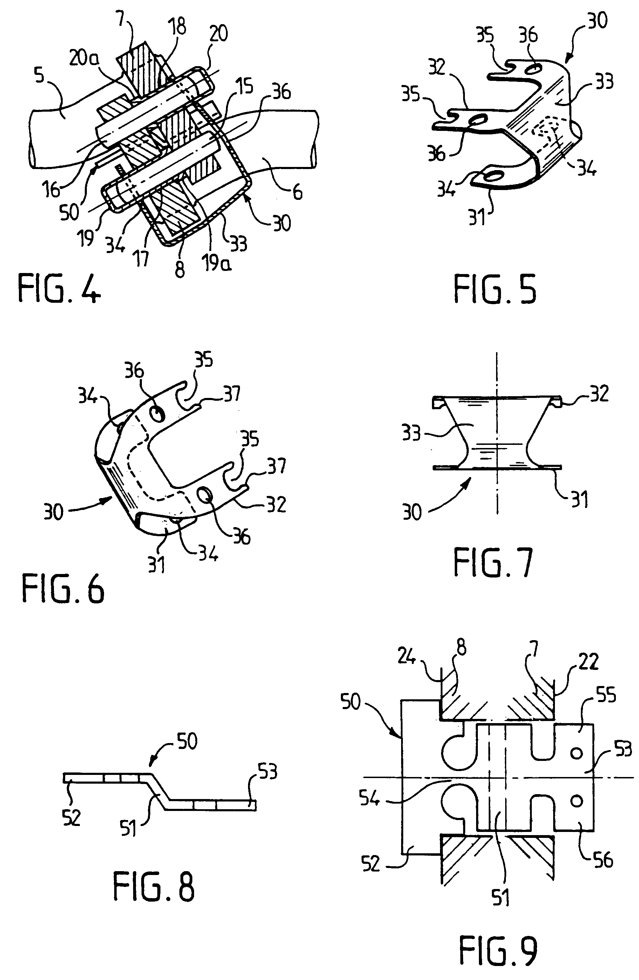

La structure détaillée du clip 30 est représentée sur les Figures 5, 6 et 7. Dans ce mode de réalisation, le clip 30 est constitué par une fourche qui a deux faces 31 et 32 reliées l'une à l'autre par une âme 33. La face 31 a un système d'attache qui est constitué par deux trous 34, qui sont destinés à recevoir les douilles 19 des axes de liaison 15 correspondants. La face 32 a un système d'agrafage, qui est constitué par deux ouvertures 35 munies chacune d'un rétrécissement 37. Chacune de ces deux ouvertures 35 a une forme qui est adaptée au contour des douilles 20 des autres axes de liaison 16, qui viennent s'engager dans ces ouvertures 35 après avoir franchi un point dur donné par le rétrécissement 37. De plus, la face 32 possède également deux trous 36, qui sont destinés à recevoir l'extrémité correspondante des axes de liaison 15, dont les douilles 19 ne sont pas reliées à elle.

Comme on peut le voir sur la Figure 1, le clip 30 vient se monter sur le dispositif de liaison séparable, au moyen de ces deux trous 34 aménagés sur la face 31, qui viennent recevoir les douilles 19 des axes de liaison 15, tandis que les deux ouvertures 35 de la face 32 viennent s'agrafer sur les douilles 20 des autres axes de liaison 16. Dans cette configuration, les deux trous 36 aménagés sur la face 32 se trouvent alors en face de l'extrémité correspondante des axes de liaison 15, dont les douilles 19 ne sont pas reliées à cette face 32.

Avant de disposer ce clip 30 sur le dispositif de liaison séparable décrit, celui-ci peut déjà comporter la plaquette fusible 50. Pour ce faire, cette plaquette fusible 50 est disposée entre les deux flasques 7 et 8 et la portion d'extrémité 6 et 5 portant l'autre flasque 8 et 7. Cette plaquette fusible 50 est amarrée à chacune de ses deux extrémités au côté du flasque 7 ou 8 correspondant. De cette façon, la plaquette fusible 50 bloque l'écartement axial des deux flasques 7 et 8 l'un par rapport à l'autre, lorsque cet écartement se fait à vitesse lente et pour une valeur beaucoup plus faible que la valeur prévue pour le clip 30, tout en permettant cet écartement lorsque il s'effectue à vitesse élevée. Les valeurs d'effort d'ouverture du clip 30 et de rupture de la plaquette fusible 50 peuvent être adaptées à la demande par le dimensionnement judicieux de ces éléments.

Comme on peut le voir sur les Figures 8 et 9, la plaquette fusible 50 est constituée par une partie centrale 51, qui est munie d'un étranglement 54. Cette partie centrale 51 se prolonge de chaque côté par une extrémité 52 et 53. La partie centrale 51 a une largeur qui est déterminée en fonction de la largeur des évidements 14 des flasques 7 et 8. L'une des extrémités 52 est conformée en talon pour venir s'appliquer contre la face 24 du flasque 8 correspondant. L'autre extrémité 53 a une largeur sensiblement égale à la largeur de la partie centrale 51, et est munie de deux ailes 55 et 56. Ces deux ailes 55 et 56 sont rabattues, en fin de montage contre la face 22 de l'autre flasque 7.

Les signes de référence insérés après les caractéristiques techniques mentionnées dans les revendications, ont pour seul but de faciliter la compréhension de ces dernières, et n'en limitent aucunement la portée.

## Revendications

1. Ensemble de sécurité pour dispositif de liaison séparable, notamment pour colonne de direction pour véhicule automobile, ledit ensemble comprenant deux tronçons d'arbres (1, 2) coaxiaux qui présentent des portions d'extrémité (5, 6) pliées de façon à faire un angle prédéterminé avec l'axe géométrique commun desdits tronçons d'arbres, lesdites portions d'extrémité se recouvrant et portant chacune un flasque (7, 8), chaque flasque étant relié à l'autre qu'il recouvre partiellement, par des axes de liaison séparables (15, 16) approximativement parallèles auxdites portions d'extrémité (5, 6), caractérisé en ce qu'il comporte un clip (30) constitué par une fourche ayant deux faces (31, 32) reliées l'une à l'autre par une âme (33), de façon que chacune des deux faces (31, 32) vienne prendre appui sur un côté extérieur du flasque (7, 8) correspondant;
- l'une des deux faces (31) ayant un système d'attache sur l'une des extrémités d'une partie des axes de liaison;
- l'autre face (32) ayant un système d'agrafage sur l'une des extrémités de l'autre partie des axes de liaison;
- l'une des deux faces (32) étant munie d'ouvertures destinées à recevoir l'extrémité correspondante des axes de liaison non reliés à elle, de manière que ledit clip (30) bloque l'écartement axial des deux flasques (7, 8) l'un par rapport à l'autre, lorsque cet écartement se fait à vitesse lente, tout en permettant cet écartement lorsqu'il s'effectue à vitesse élevée.

2. Ensemble de sécurité selon la revendication 1, caractérisé en ce que:
- lesdits axes de liaison (15, 16) fixés à chaque flasque (7, 8) sont engagés dans des trous (17, 18) ménagés dans l'autre flasque (8, 7) par l'intermédiaire de douilles (19, 20);
- l'une des deux faces (31) du clip (30) ayant un système d'attache sur les douilles (19) d'une partie des axes de liaison (15, 16);
- l'autre face (32) du clip (30) ayant un système d'agrafage sur les douilles (20) de l'autre partie des axes de liaison (15, 16);
- l'une des faces (32) étant munie d'ouvertures destinées à recevoir l'extrémité correspondante des axes de liaison (15, 16) dont les douilles (19) sont non reliées à elle.

3. Ensemble de sécurité selon l'une quelconque des revendications 1 ou 2, caractérisé en ce que, pour le dispositif de liaison séparable,
- chaque flasque (7, 8) est pourvu d'un orifice (9, 10) dans lequel est engagée la portion d'extrémité (5, 6) du tronçon d'arbre correspondant (1, 2);
- chaque flasque (7, 8) comporte deux saillies latérales (13) qui délimitent entre elles un évidement (14) pour le passage de la portion d'extrémité (5, 6) à laquelle est fixée l'autre flasque (7, 8);
- les axes de liaison (15, 16) sont fixés chacun dans une saillie latérale (13) de chaque flasque (7, 8).

4. Ensemble de sécurité selon la revendication 3, caractérisé en ce qu'il comporte une plaquette fusible (50) disposée entre les deux flasque (7, 8) et entre chacun des flasques (7, 8) et la portion d'extrémité (5, 6) portant l'autre flasque (7, 8), cette plaquette fusible (50) étant amarrée à chacune de ses deux extrémités au côté du flasque (7, 8) correspondant, de manière que ladite plaquette fusible (50) bloque l'écartement axial des deux flasques (7, 8) l'un par rapport à l'autre, lorsque cet écartement se fait à vitesse lente et pour une valeur plus faible que pour le clip (30), tout en permettant cet écartement lorsqu'il s'effectue à vitesse élevée.

5. Ensemble de sécurité selon l'une quelconque des revendications 3 ou 4, caractérisé en ce que le clip (30):
- est constitué par une fourche ayant deux faces (31, 32) reliées l'une à l'autre par une âme (33);
- la face (31) ayant un système d'attache constitué par deux trous (34) recevant les douilles (19) des axes de liaison (15);
- la face (32) ayant un système d'agrafage constitué par deux ouvertures (35) munies d'un rétrécissement (37) recevant les douilles (20) des autres axes de liaison (16);
- la face (32) possédant également deux trous (36) destinés à recevoir l'extrémité correspondante des axes de liaison (15) dont les douilles (19) sont reliées à elle.

6. Ensemble de sécurité selon l'une quelconque des revendications 4 et 5, caractérisé en ce que la plaquette fusible (50) est constituée par une partie centrale (51) munie d'un étranglement (54) et de deux extrémités (52, 53), ladite partie centrale (51) ayant une largeur déterminée en fonction de la largeur des évidements (14) des flasques (7, 8), l'une des extrémités (52) étant conformée en talon pour venir s'appliquer contre la face (24) du flasque (8) correspondant, tandis que l'autre extrémité (53) a une largeur sensiblement égale à la largeur de la partie centrale (51) et est munie de deux ailes (55, 56) qui sont rabattues, en fin de montage, contre la face (22) de l'autre flasque (7).

## Claims

1. Safety assembly for a separable coupling device, particularly for a motor vehicle steering column, said assembly comprising two coaxial shaft sections (1, 2) having end portions (5, 6) folded in order to make a predetermined angle with the common geometric axis of said shaft sections, said end portions overlapping and bearing each a plate (7, 8), each plate being connected to the other which partially overlaps by separable link pins (15, 16), substantially parallel to said end portions (5, 6), characterized in that it comprises a clip (30) made up of a fork having two faces (31, 32) connected to each other by a web (33) so that each of the two faces (31, 32) bears against one outer side of the corresponding plate (7, 8);
- one of the two faces (31) having a system for attaching on one of the ends of one part of the link pins;
- the other face (32) having a system for clamping on one of the ends of the other part of the link pins;
- one of the two faces (32) being provided with openings intended to receive the corresponding end of the link pins that are not connected to it, in such a way that the said clip (30) blocks the axial spacing of the two plates (7, 8) with respect to each other when this spacing occurs at slow speed, while allowing this spacing when it occurs at high speed.

2. Safety assembly according to claim 1, characterized in that:
- the said link pins (15, 16) fixed to each plate (7, 8) are engaged in holes (17, 18) provided in the other plate (8, 7) via bushes (19, 20);
- one of the two faces (31) of the clip (30) having a system for attaching on the bushes (19) of one part of the link pins (15, 16);
- the other face (32) of the clip (30) having a system for clamping on the bushes (20) of the other part of the link pins (15, 16);
- one of the faces (32) being provided with openings intended to receive the corresponding end of the link pins (15, 16) whose bushes (19) are not connected to it.

3. Safety assembly according to anyone of claims 1 or 2, characterized in that for the separable coupling device:
- each plate (7, 8) is provided with an orifice (9, 10) in which the end portion (5, 6) of the corresponding shaft section (1, 2) is engaged;
- each plate (7, 8) comprises two lateral protrusions (13) which delimit between them a recess (14) for the passage of the end portion (5, 6) to which the other plate (7, 8) is fixed;
- the link pins (15, 16) are each fixed in a lateral protrusion (13) of each plate (7, 8).

4. Safety assembly according to claim 3, characterized in that it comprises a fusible plate (50) arranged between the two plates (7, 8) and between each of the plates (7, 8) and the end portion (5, 6) bearing the other plate (7, 8), this fusible plate (50) being secured at each of its two ends to the side of the corresponding plate (7,8) in such a way that the said fusible plate (50) blocks the axial spacing of the two plates (7, 8) with respect to each other when this spacing occurs at slow speed and for a much lower value than that of the clip (30), while allowing this spacing when it occurs at high speed.

5. Safety assembly according to any one of claims 3 or 4, characterized in that the clip (30):
- is made up of a fork having two faces (31, 32) connected to each other by a web (33);
- the face (31) having an attachment system made up of two holes (34) receiving the bushes (19) of the link pins (15);
- the face (32) having a clamping system made up of two openings (35) provided with a narrowing (37) which receives the bushes (20) of the other link pins (16);
- the face (32) also having two holes (36) intended to receive the corresponding end of the link pins (15) whose bushes (19) are connected to it.

6. Safety assembly according to any one of claims 4 and 5, characterized in that the fusible plate (50) is made up of a central part (51) provided with a neck (54) and two ends (52, 53), the width of the central part (51) being chosen according to the width of the recesses (14) of the plates (7, 8), one of the ends (52) being shaped as a heel in order to bear against the face (24) of the corresponding plate (8), the width of the other end (53) being substantially equal to the width of the central part (51) and having two wings (55, 56) which are folded back against the face (22) of the other plate (7) at the end of assembly.

## Patentansprüche

1. Sicherheitsvorrichtung für ein lösbares Verbindungselement, insbesondere für eine Kraftfahrzeuglenksäule, wobei die Vorrichtung zwei koaxiale Wellenendstücke (1, 2) umfaßt, die Endabschnitte (5, 6) aufweisen, welche so gebogen sind, daß sie einen vorbestimmten Winkel mit der gemeinsamen geometrischen Achse der Wellenendstücke bilden, wobei die Endabschnitte sich überdecken und jeweils einen Flansch (7, 8) tragen, wobei jeder Flansch mit dem anderen, der ihn teilweise überlappt, durch lösbare Verbindungsbolzen (15, 16) verbunden ist, die zu den Endabschnitten (5, 6) ungefähr parallel verlaufen, dadurch gekennzeichnet, daß sie eine Klammer (30) aufweist, die aus einer Gabel mit zwei durch einen Steg (33) miteinander verbundenen Seitenteilen (31, 32) besteht, derart, daß jedes der beiden Seitenteile (31, 32) an der Außenseite des entsprechenden Flansches (7, 8) zur Anlage kommt;
- wobei das eine (31) der beiden Seitenteile an einem der Enden eines Teiles der Verbindungsbolzen eine Befestigungseinrichtung aufweist;
- wobei das andere Seitenteil (32) an einem der Enden des anderen Teiles der Verbindungsbolzen eine Klammereinrichtung aufweist;
- wobei das eine (32) der beiden Seitenteile mit Öffnungen versehen ist, die dafür vorgesehen sind, das entsprechende Ende der nicht mit ihm verbundenen Verbindungsbolzen aufzunehmen, derart, daß die Klammer (30) ein axialen Trennen der beiden Flansche (7, 8) in bezug zueinander blockiert, wenn diese Trennung mit niedriger Geschwindigkeit stattfindet, obgleich diese Trennung gestattet wird, wenn sie sich bei erhöhter Geschwindigkeit vollzieht.

2. Sicherheitsvorrichtung nach Anspruch 1, dadurch gekennzeichnet, daß
- die an jedem Flansch (7, 8) befestigten Verbindungsbolzen (15, 16) mittels Ringen (19, 20) mit Löchern (17, 18) im Eingriff sind, die in dem anderen Flansch (8, 7) angebracht sind;
- wobei das eine (31) der beiden Seitenteile der Klammer (30) an den Ringen (19) des einen Teiles der Verbindungsbolzen (15, 16) eine Befestigungseinrichtung aufweist;
- wobei das andere Seitenteil (32) der Klammer (30) an den Ringen (20) des anderen Teiles der Verbindungsbolzen (15, 16) eine Klammereinrichtung aufweist;
- wobei das eine Seitenteil (32) mit Öffnungen versehen ist, die zur Aufnahme des entsprechenden Endes der Verbindungsbolzen (15, 16) vorgesehen sind, deren Ringe (19) nicht mit ihm verbunden sind.

3. Sicherheitsvorrichtung nach einem der Ansprüche 1 oder 2, dadurch gekennzeichnet, daß für das lösbare Verbindungselement
- jeder Flansch (7, 8) mit einer Öffnung (9, 10) versehen ist, mit der der Endabschnitt (5, 6) des entsprechenden Wellenendstückes (1, 2) im Eingriff ist;
- jeder Flansch (7, 8) zwei seitliche Vorsprünge (13) aufweist, die zwischen sich eine Aussparung (14) für das Hindurchgehen des Endabschnittes (5, 6) begrenzen, mit dem der andere Flansch (7, 8) verbunden ist;
- die Verbindungsbolzen (15, 16) jeweils in einem seitlichen Vorsprung (13) jedes Flansches (7, 8) befestigt sind.

4. Sicherheitsvorrichtung nach Anspruch 3, dadurch gekennzeichnet, daß sie eine schmelzbare Scheibe (50) aufweist, die sich zwischen den beiden Flanschen (7, 8) und dem Endabschnitt (5, 6) befindet, der den anderen Flansch (7, 8) trägt, wobei diese schmelzbare Scheibe (50) an jedem ihrer beiden Enden an der Seite des entsprechenden Flansches (7, 8) befestigt so ist, daß die schmelzbare Scheibe das axiale Trennen der beiden Flansche (7, 8) in bezug zueinander blockiert, wenn diese Trennung mit niedriger Geschwindigkeit und bei einem geringeren Wert als für die Klammer (30) stattfindet, obgleich diese Trennung gestattet wird, wenn sie sich bei erhöhter Geschwindigkeit vollzieht.

5. Sicherheitsvorrichtung nach einem der Ansprüche 3 oder 4, dadurch gekennzeichnet, daß die Klammer (30)
- aus einer Gabel mit zwei Seitenteilen (31, 32) besteht, die durch einen Steg (33) miteinander verbunden sind;
- wobei das Seitenteil (31) eine Befestigungseinrichtung aufweist, die aus zwei Löchern (34) besteht, die die Ringe (19) der Verbindungsbolzen (15) aufnehmen;
- wobei das Seitenteil (32) einer Klammervorrichtung aufweist, die aus zwei mit einer Verengung (37) versehenen Öffnungen (35) besteht, die die Ringe (20) der anderen Verbindungsbolzen (16) aufnehmen;
- wobei das Seitenteil (32) ebenfalls zwei Löcher (36) besitzt, die dafür vorgesehen sind, das entsprechende Ende der Verbindungsbolzen (15) aufzunehmen, deren Ringe (19) mit ihm verbunden sind.

6. Sicherheitsvorrichtung nach einem der Ansprüche 4 und 5, dadurch gekennzeichnet, daß die schmelzbare Scheibe (50) aus einem Mittelteil (51), der mit einer Querschnittsverminderung (54) versehen ist, und zwei Endteilen (52, 53) besteht, wobei der Mittelteil (51) eine Breite besitzt, die in Abhängigkeit von der Breite der Aussparung (14) der Flansche (7, 8) bestimmt ist, wobei eines der Endteile (52) zu einem Ansatz ausgebildet ist, um sich an die Seite (24) des entsprechenden Flansches (8) anzulegen, während das andere Endteil (53) eine Breite von im wesentlichen gleich der Breite des Mittelteiles (51) besitzt und mit zwei Flügeln (55, 56) versehen ist, die am Schluß der Montage zur Seite (22) des anderen Flansches (7) umgebogen werden.
